# EUROPÄISCHE PATENTANMELDUNG

(11) **EP 0 524 164 A1**
(43) Veröffentlichungstag der Anmeldung: **20.01.1993**
(21) Anmeldenummer: 92890158.6
(22) Anmeldetag: 29.06.1992
(51) Int. Cl.: C08K 5/10, C08L 21/00, B60C 1/00

(54) **Pneumatischer Fahrzeugreifen**

(30) Priorität: 18.07.1991 AT 1441/91
(71) Anmelder: Semperit Reifen Aktiengesellschaft, A-2514 Traiskirchen (AT)
(72) Erfinder: Hausmann, Bernadette, Dr., A-2734 Puchberg (AT)
(74) Vertreter: Vinazzer, Edith

(57) **Zusammenfassung**

Der Weichmacheranteil einer Kautschukmischung des Laufstreifens eines pneumatischen Fahrzeugreifens enthält zumindest teilweise Triglyceride von Fettsäuren, vorzugsweise natürliches Rapsöl mit einem ölsäuregehalt > 50 % und einem Ölsäure/Linolsäure-Verhältnis ≧ 2 : 1. Damit wird bessere Haftung sowohl auf Eis und Schnee als auch auf trockener und nasser Fahrbahn erzielt, ohne andere Eigenschaften des Reifens negativ zu beeinflussen.

## Beschreibung

Die Erfindung betrifft einen pneumatischen Fahrzeugreifen, dessen Laufstreifen aus einer Kautschukmischung besteht, welche einen Weichmacheranteil enthält. Weiters betrifft die Erfindung auch eine Weichmachermischung zur Verwendung in einer Kautschukmischung für den Laufstreifen eines pneumatischen Fahrzeugreifen, sowie ein Verfahren zur Herstellung einer derartigen Weichmachermischung.

Ein vorrangiges Bemühen im Reifenbau ist es, die Laufeigenschaften möglichst unabhängig von Umgebungs- und Witterungseinflüssen zu verbessern bzw. die in diesem Zusammenhang wesentlichen Kriterien wie Greifkraft, Rutschbeständigkeit, Rollwiderstand und dergleichen durch entsprechende Weiterentwicklungen des Reifenprofils und vor allem auch der Laufflächenmischung positiv zu beeinflussen.

Polymere mit niedrigem Glasübergangspunkt, wie Naturkautschuk (NR) und cis-Polybutadien-Kautschuk (BR), geben bekanntlich gute Traktion auf Schnee und Eis. (W. Gnorich und K.A. Grosch, I. Inst. Rubber Ind. 6, 192 (1972)) wobei jedoch bei solchen Verschnitten die Naßhaftung unbefriedigend ist.

Um, ausgehend von diesen konventionellen Laufstreifenmischungen, die Balance zwischen Eis-, Schnee-, Trokken- und Nässeeigenschaften zu verbessern, wurden die Materialien der Lauffläche weiterentwickelt und zwar einerseits durch Polymere und Polymerverschnitte, die eine höhere Dämpfung aufweisen und damit die Naßhaftung positiv beeinflussen, andererseits durch Weichmacher, die die Verhärtung des Gummis bei tiefen Temperaturen verringern. Da Winter- und Nässeeigenschaften üblicherweise gegenläufig sind, verschlechtern Polymere, die die Naßhaftung verbessern, zumeist jedoch gleichzeitig Schnee- und Eishaftung.
Die Zugabe von Kälteweichmachern (A. Ahagon et al., ASC Rubber Div, 131st Meeting May 1987) wie naphtenische oder paraffinische Mineralölweichmacher oder Esterplastifiziermittel verbessern zwar die Wintereiqenschaften, verschlechtern jedoch gleichzeitig die Naßhaftung.

Durch gleichzeitige Beimengung von Butylkautschuk und Esterplastifiziermittel soll nach einem anderen bekannten Vorschlag (siehe z.B. DE-3 417 166 C1) die Greifkraft auf Schnee und Eis verbessert werden, ohne die Greifkraft auf nasser Fahrbahn herabzusetzen. Nachteile dabei sind eine Verschlechterung der Eigenschaften auf trockener Fahrbahn sowie eine durch die Unverträglichkeit der genannten Kautschuke mit Butyl herborgerufenen erhöhten Rißanfälligkeit und ein hoher Preis der angeführten Materialien (Butylkautschuk und genannte Ester); ebenso gestaltet sich das Mischverfahren durch die genannte Unverträglichkeit schwierig, da Inhomogenitäten unvermeidlich sind.

Aufgabe der vorliegenden Erfindung ist es, einen Reifen der eingangs genannten Art so auszubilden, daß die genannten Nachteile der bekannten Anordnungen bzw. Mischungen vermieden werden und daß insbesondere sowohl auf Eis und Schnee als auch auf trockener und nasser Fahrbahn bessere Haftung erzielt werden soll, ohne andere Eigenschaften, wie Verschleiß und Rollwiderstand, negativ zu beeinflussen. Zusätzlich sollte für eine geeignete Laufstreifenmischung auch ein einfaches und brauchbares Verfahren zur Herstellung angegeben werden.

Bei einem pneumatischem Fahrzeugreifen der eingangs genannten Art wird diese Aufgabe gemäß der Erfindung dadurch gelöst, daß der Weichmacheranteil zumindest teilweise aus Triglyceriden von Fettsäuren besteht. Verglichen mit anderen Kälteplastifiziermitteln, wie synthetischen Esterweichmachern, Mineralölderivaten, und dergleichen, hat sich überraschenderweise herausgestellt, daß die genannten Triglyceride von Fettsäuren schon in geringen Dosierungen eine deutliche Verringerung der Steifigkeiten (Shore Härte, dynamischer Speichermodul E′) bei tiefen Temperaturen (unter 0° C) bewirken, ohne daß etwa der Skidwiderstand (British Pendulum Skid Tester BPST) abgesenkt würde. Anhand von durchgeführten Reifenprüfungen hat sich eine Verbesserung aller Disziplinen herausgestellt. Vor allem sind die Wintereigenschaften, wie Traktionsvermögen auf Schnee sowie Eishaftung gemäß der Erfindung deutlich angestiegen. Weiters ist auch das Haftniveau auf nasser Fahrbahn mit einem erfindungsgemäß ausgebildeten Reifen deutlich höher als bei konventionellen Reifen, wobei gleichzeitig ein gutes Fahrverhalten bei abgesenktem Rollwiderstand beobachtet wurde.

Gemäß einer besonders bevorzugten Ausgestaltung der Erfindung ist vorgesehen, daß die Triglyceride einen Ölsäuregehalt > 50 % aufweisen, wobei vorzugsweise auch ein Linolsäureanteil mit einem Ölsäure/Linolsäure-Verhältnis ≧ 2 : 1 vorliegt. Mit einem derartigen Fettsäurespektrum wurden beste Ergebnisse erzielt.

Besonders bevorzugt im letztgenannten Zusammenhang ist eine weitere Ausgestaltung der Erfindung, gemäß welcher der Triglycerid-Anteil zumindest zum Teil aus natürlichem Rapsöl besteht. Beste Ergebnisse wurden beispielsweise mit einem "Rapsöl roh, entwässert, Ölmühle Bruck/Leitha" erzielt, welches einen Ölsäuregehalt > 53 % sowie ein Ölsäure/Linolsäureverhältnis von 2 : 1 bei Vorhandensein geringer Erucasäuremengen aufweist. Rapsöl ist darüber hinaus toxikologisch unbedenklich, umweltverträglich und preisgünstig, sodaß für die erwähnte Verbesserung der Reifeneigenschaften keine diesbezüglichen Nachteile in Kauf genommen werden müssen.

Der Rapsölanteil beträgt nach einer bevorzugten weiteren Ausbildung der Erfindung - bezogen auf 100 Kautschukteile der Laufstreifenmischung - 2 bis 35 Gewichtsteile (2 bis 35 phr), wobei ein Rapsölanteil von 4 bis 8 phr besonders bevorzugt ist. Bereits derart geringe Mengen, die die sonstigen Eigenschaften der Laufstreifenmischung praktisch überhaupt nicht tangieren, zeigen große Wirksamkeit im Sinne der angesprochenen Verbesserungen der Reifeneigenschaften.

Gemäß einer weiteren Ausgestaltung der Erfindung ist vorgesehen, däß der restliche Weichmacheranteil aus Erdölweichmachern, Paraffinöl, Naphthenöl, aromatischem Öl, oder einem Gemisch von zwei oder mehreren dieser Substanzen besteht. Mit diesen an sich bekannten Beimengungen können die Mischungseigenschaften für verschiedene Zwecke weiter beeinflußt bzw. verbessert werden.

Die Kautschukmischung selbst, die das Rapsöl enthält, kann darüber hinaus mindestens ein Polymer der Gruppe: Naturkautschuk, Polyisoprenkautschuk, cis- oder vinyl-Polybutadien-Kautschuk, Styrolbutadien-Kautschuk (SBR), oder Gemische aus diesen enthalten, wobei auch Zusätze von Butyl-Kautschuk, Halobutyl-Kautschuk oder 3, 4 IR (3, 4 Isopren-Kautschuk) möglich sind. Weiters können ohne Einschränkungen auch die üblichen Mengen an Füllstoffen, Alterungsschutzmitteln, Vulkanisationschemikalien, Zink Oxyd, Stearinsäure, Verarbeitungshilfsmitteln, und dergleichen vorgesehen sein.

Bei einer Weichmachermischung der eingangs genannten Art ist gemäß der Erfindung vorgesehen, daß sie Trilyceride von Fettsäuren, vorzugsweise mit einem Öläuregehalt > 50 % enthält, wobei bevorzugt ist, wenn auch ein Linolsäureanteil vorliegt, mit einem Ölsäure/Linolsäure-Verhältnis ≧ 2 : 1. Diese Weichmachermischung kann unmittelbar bei der Herstellung eines gemäß den obigen Ausführungen ausgestalteten Fahrzeugreifens nach der Erfindung verwendet werden. Insbesonders ist weiters in diesem Zusammenhang vorgesehen, daß der Trilycerid-Anteil zumindest zum Teil gebildet ist von rapsölverstrecktem Kautschuk, mit einem Rapsölanteil, der - bezogen auf 100 Kautschukteile der Laufstreifenmischung - 2 bis 35 Gewichtsteile (2 bis 35 phr), vorzugsweise 4 bis 8 phr, beträgt.

Der restliche Weichmacheranteil einer derartigen Weichmachermischung kann gemäß der Erfindung aus Erdölweichmachern, Paraffinöl, Naphthenöl, aromatischem Öl, oder einem Gemisch von zwei oder mehreren dieser Substanzen bestehen.

Weitere Merkmale und Vorteile dieser erfindugsgemäßen Weichmachermischungen sind im Zusammenhang mit den entsprechenden Merkmalen und Vorteilen der eingangs besprochenen Reifenausgestaltung bereits erwähnt.

Das erfindungsgemäße Verfahren zur Herstellung einer oben beschriebenen Weichmachermischung ist dadurch gekennzeichnet, daß der Triglycerid: bzw. Rapsöl-Anteil über einen triglycerid- bzw. rapsölverstreckten Kautschuk, der gegebenenfalls auch zusätzlich Ruß und/oder weitere Weichmacher enthält, zugegeben wird. Für einen Emulsions-SBR ist dieses Verfahren erfindungsgemäß so weitergebildet, daß dem SBR-Latex noch vor der Koagulation das Triglycerid bzw. Rapsöl, gegebenenfalls gemeinsam mit Ruß und/oder weiteren Weichmachern, beigemengt wird.

In Tabelle 1 sind einige Beispiele angeführt, die zeigen, daß der beschriebene Effekt einer Absenkung der Tieftemperatursteifigkeiten unabhängig vom verwendeten Polymer bzw. Mischungssystem deutlich auftritt. Aus den auf Rapsöl der beschriebenen Art beschränkten Beispielen ist auch ersichtlich, daß schon geringe Mengen von Rapsöl große Wirksamkeit zeigen. So etwa weist Beispiel Nr. 2 mit 5 phr Rapsöl einen Abfall von E′ bei -40°C von ca. 40 % gegenüber der rapsölfreien Mischung auf.

Die durchgeführten Reifenprüfungen (siehe Tab. 2) haben durch die beschriebenen Maßnahmen des Teilersatzes von Weichmachern durch Rapsöl eine Verbesserung aller Disziplinen gezeigt. Vor allem ist eine deutliche Verbesserung der Wintereigenschaften, wie Traktionsvermögen auf Schnee sowie Eishaftung durch Rapsöleinsatz deutlich angestiegen, das Haftniveau auf nasser Fahrbahn ist ebenfalls mit der rapsölhältigen Mischung höher bei gleichzeitig gutem Fahrverhalten und abgesenktem Rollwiderstand.

### Erklärung zu Tabelle 2: (Beispiele 1 und 2 wie in Tabelle 1)

### Reifenprüfungen:

Teststreifen wurden in der Dimension 195/65 R 15 mit Laufstreifen entsprechend den beschriebenen Mischungszusammensetzungen mit und ohne Rapsöl in den folgenden Disziplinen getestet, wobei alle Angaben als Indexwerte angegeben sind, das heißt, je höher der Indexwert umso besser ist die jeweilige Eigenschaft.

### Traktion auf Schnee:

Dabei wurde auf einer Schneefahrbahn die Längsbeschleunigung eines Testfahrzeuges gegen den Schlupf zwischen angetriebener und rollender Achse aufgetragen. Die mittlere Höhe der Beschleunigungs/Schlupf-Kurve gibt das Traktionsvermögen des Reifens auf Schnee wieder.

### Bremsen auf Eis:

Es wurden Blockierbremswegmessungen aus 20 km/h bis zum vollkommenen Stillstand des Fahrzeuges auf glatter Kunsteisoberfläche in einer Halle (Eistemperatur -5°C/ Umgebungstemperatur +5°C) durchgeführt.

### Bremsen auf nasser Fahrbahn:

Für Blockierbremswegmessungen auf rauher, nasser Asphaltoberfläche wurde bei 60 km/h Ausgangsgeschwindigkeit bis zum Stillstand des Fahrzeuges gebremst.

### Kreisfahrt auf nasser Oberfläche:

Dabei wurde auf rauher Asphaltbahn die Rundenzeit bei maximaler Geschwindigkeit über 10 Umläufe gemittelt. Der Kreisradius betrug 50m.

Rollwiderstandsmessungen wurden auf einer Stahltrommel durchgeführt, wobei in einem Geschwindigkeitsbereich von 60 bis 150 km/h die notwendige Antriebsleistung zwischen voll belastetem und nur leicht berührendem Reifen gemessen wurde.

### Fahrverhalten auf trockener Fahrbahn:

Der Test wurde auf einer Hochgeschwindigkeitsstrecke von mehreren km Länge durchgeführt, und dabei das Fahrverhalten subjektiv beurteilt und als Indexzahl ausgegeben.

### Shore A Härte:

Der Test wurde gemäß DIN Norm 53505 jedoch im Kälteschrank bei Proben- und Lufttemperaturen von -10°C durchgeführt.

### E′:

Der dynamische Speichermodul wurde an einem "Eplexor" der Firma Gaddum gemessen (Frequenz 10 Hz, kraftkonstant, statische Spannung 0,64MPa, dynamische Spannung +/-0,38MPa) zylindrische Prüfkörper mit 10 mm Durchmesser, 10 mm Höhe.

### BPST:

Skid Messungen wurden auf einem British Portable Skid Tester durchgeführt.

**TABELLE 1:**

| Beispiel: | 1 | 2 | 3 | 4 | 5 | 6 | 7 | 8 | 9 | 10 |
|---|---|---|---|---|---|---|---|---|---|---|
| NR | 60 | 60 | 70 | 70 | 70 | 70 | 40 | 40 | | |
| BR | | | | | 30 | 30 | 20 | 20 | 30 | 30 |
| SBR | 40 | 40 | 30 | 30 | | | 40 | 40 | 70 | 70 |
| Aktivruß | 70 | 70 | 70 | 70 | 75 | 75 | 72 | 72 | 80 | 80 |
| WEICHMACHER | | | | | | | | | | |
| Minneralöl arom. | 40 | 35 | 20 | 20 | 45 | 37 | 33 | 28 | 50 | 45 |
| Min.öl naphth. | | | 15 | | | | | | | |
| Rapsöl | | 5 | | 15 | | 8 | | 5 | | 5 |
| Stearinsäure | 2,5 | 2,5 | 2,5 | 2,5 | 2,5 | 2,5 | 2,5 | 2,5 | 2,5 | 2,5 |
| ZnO | 3 | 3 | 3 | 3 | 3 | 3 | 3 | 3 | 3 | 3 |
| Sulfenamidbeschleuniger | 2 | 2 | 1,5 | 1,5 | 2,5 | 2,5 | 1,2 | 1,2 | 1,8 | 1,8 |
| Schwefel | 3 | 3 | 1,8 | 1,8 | 1,8 | 1,8 | 2 | 2 | 2,4 | 2,4 |
| SH-10°C (Skt) | 76 | 72 | 64 | 61 | 65 | 62 | 77 | 75 | 74 | 70,7 |
| E′-10°C | 35,7 | 20,9 | 10,2 | 8,5 | 11,6 | 9,5 | 39,5 | 29,8 | 32,9 | 21,2 |
| E′-20°C | 74,9 | 39,5 | 14,6 | 11,6 | 21,1 | 16 | 70,1 | 54,4 | 56,7 | 34,2 |
| E′-40°C | 405,1 | 236 | 52 | 36,3 | 120,7 | 79,2 | 165,1 | 142,7 | 139,8 | 83,7 |
| BPST | 49 | 50,1 | 45,5 | 46 | 49 | 49,5 | 50,2 | 50,5 | 47,2 | 47 |

**TABELLE 2:**

| Beispiele: | 1 | 2 | |
|---|---|---|---|
| Reifenprüfung (195/65 R15) | | | |
| Traktion auf Schnee | 100 | 113 | |
| Bremskraft aus Eis | 100 | 109 | |
| Bremskraft auf Nässe | 100 | 105 | |
| Ausbrechen auf Nässe | 100 | 104 | |
| Fahrverhalten auf trockener Straße | 100 | 102 | |
| Rollwiderstand | 100 | 103 | |

## Patentansprüche

1. Pneumatischer Fahrzeugreifen, dessen Laufstreifen aus einer Kautschukmischung besteht, welche einen Weichmacheranteil enthält, dadurch gekennzeichnet, daß der Weichmacheranteil zumindest teilweise aus Triglyceriden von Fettsäuren besteht.

2. Reifen nach Anspruch 1, dadurch gekennzeichnet, daß die Triglyceride einen Ölsäuregehalt > 50 % aufweisen, wobei vorzugsweise auch ein Linolsäureanteil mit einem Ölsäure/Linolsäure-Verhältnis ≧ 2 : 1 vorliegt.

3. Reifen nach Anspruch 1 oder 2, dadurch gekennzeichnet, daß der Triglycerid-Anteil zumindest zum Teil aus natürlichem Rapsöl besteht.

4. Reifen nach Anspruch 3, dadurch gekennzeichnet, daß der Rapsölanteil - bezogen auf 100 Kautschukteile der Laufstreifenmischung - 2 bis 35 Gewichtsteile (2 - 35 phr) beträgt.

5. Reifen nach Anspruch 4, dadurch gekennzeichnet, daß der Rapsölanteil 4 bis 8 phr beträgt.

6. Reifen nach einem der Ansprüche 2 bis 5, dadurch gekennzeichnet, daß der restliche Weichmacheranteil aus Erdölweichmachern, Paraffinöl, Naphthenöl, aromatischem Öl, oder einem Gemisch von zwei oder mehreren dieser Substanzen besteht.

7. Weichmachermischung zur Verwendung in einer Kautschukmischung für den Laufstreifen eines pneumatischen Fahrzeugreifens, enthaltend Triglyceride von Fettsäuren, vorzugsweise mit einem Ölsäuregehalt > 50 %.

8. Mischung nach Anspruch 7, dadurch gekennzeichnet, daß auch ein Linolsäureanteil mit einem ölsäure/ Linolsäure-Verhältnis ≧ 2 : 1 vorliegt.

9. Mischung nach Anspruch 7 oder 8, dadurch gekennzeichnet, daß der Triglycerid-Anteil zumindest zum Teil gebildet ist von rapsölverstrecktem Kautschuk, mit einem Rapsölanteil, der - bezogen auf 100 Kautschukteile der Laufstreifenmischung - 2 bis 35 Gewichtsteile (2 - 35 phr) beträgt.

10. Weichmachermischung nach Anspruch 9, dadurch gekennzeichnet, daß der Rapsölanteil 4 bis 8 phr beträgt.

11. Weichmachermischung nach einem der Ansprüche 7 bis 10, dadurch gekennzeichnet, daß der restliche Weichmacheranteil aus Erdölweichmachern, Paraffinöl, Naphthenöl, aromatischem Öl, oder einem Gemisch von zwei oder mehreren dieser Substanzen besteht.

12. Verfahren zur Herstellung einer Weichmachermischung nach einem oder mehreren der Ansprüche 7 bis 11, dadurch gekennzeichnet, daß der Triglycerid- bzw. Rapsöl-Anteil über einen Triglycerid- bzw. rapsölverstreckten Kautschuk, der gegebenenfalls auch zusätzlich Ruß und/oder weitere Weichmacher enthält, zugegeben wird.

13. Verfahren nach Anspruch 12, dadurch gekennzeichnet, daß für einen Emulsions-SBR dem SBR-Latex noch vor der Koagualtion das Triglycerid bzw. Rapsöl, gegebenenfalls gemeinsam mit Ruß und/oder weiteren Weichmachern, beigemengt wird.
